# EUROPÄISCHE PATENTSCHRIFT

(11) **EP 1 836 060 B1**
(45) Veröffentlichungstag und Bekanntmachung des Hinweises auf die Patenterteilung: **25.02.2009**
(21) Anmeldenummer: 05814389.2
(22) Anmeldetag: 02.12.2005
(51) Int. Cl.: B60C 15/06

(54) **FAHRZEUGLUFTREIFEN MIT WULSTVERSTÄRKER**
PNEUMATIC VEHICLE TIRE HAVING A BEAD REINFORCING ELEMENT
PNEUMATIQUE DE VEHICULE A RENFORCEMENT PROTECTEUR DU TALON

(30) Priorität: 04.01.2005 DE 102005000755
(43) Veröffentlichungstag der Anmeldung: 26.09.2007
(73) Patentinhaber: Continental Aktiengesellschaft, 30165 Hannover (DE)
(72) Erfinder: KORTE, Hans-Bernd, 31515 Wunstorf (DE); KRAUS, Martin, Josef, 30167 Hannover (DE); MAZUR, Heinz-Bernhard, 30900 Wedemark (DE)
(74) Vertreter: Finger, Karsten
(86) Internationale Anmeldenummer: PCT/EP2005/012943
(87) Internationale Veröffentlichungsnummer: WO 2006/072303

(56) Entgegenhaltungen:
- EP-A- 1 174 289
- US-A- 3 044 522
- PATENT ABSTRACTS OF JAPAN Bd. 2003, Nr. 06, 3. Juni 2003 (2003-06-03) -& JP 2003 048409 A (FUJI SEIKO KK), 18. Februar 2003 (2003-02-18)

## Beschreibung

Die Erfindung betrifft einen Fahrzeugluftreifen mit einem Laufstreifen, mit zwei Reifenseitenwänden und jeweils einem am radial inneren Ende einer Reifenseitenwand ausgebildeten Reifenwulst, mit einer Karkasse, die sich auf beiden Seiten des Laufstreifens vom Laufstreifen mit einem Hauptteil durch die Reifenseitenwand nach radial innen zum Reifenwulst erstreckt und im Reifenwulst um einen zur Sicherung des Sitzes des Fahrzeugluftreifens auf einer korrespondierend ausgebildeten Felge ausgebildeten über den Umfang des Fahrzeugluftreifens erstreckt ausgebildeten Wulstkern nach radial außen umgeschlagen ist, gemäß den Merkmalen des Oberbegriffs des Anspruchs 1.

Ein solcher Fahrzeugluftreifen ist aus der EP 1 174 289 A2 bekannt.

Der Erfindung liegt die Aufgabe zugrunde, den Wulstbereich in einfacher Weise mit hoher Umfangssteifigkeit bei gleichmäßiger Krafteinleitung von Karkasse in den Wulst auszubilden.

Die Aufgabe wird erfindungsgemäß gelöst durch die Ausbildung eines Fahrzeugluftreifens gemäß den Merkmalen von Anspruch 1 mit einem Laufstreifen, mit zwei Reifenseitenwänden und jeweils einem am radial inneren Ende einer Reifenseitenwand ausgebildeten Reifenwulst, mit einer Karkasse, die sich auf beiden Seiten des Laufstreifens mit einem Hauptteil der Karkasse vom Laufstreifen ausgehend durch die Reifenseitenwand nach radial innen zum Reifenwulst erstreckt und die im Reifenwulst um einen zur Sicherung des Sitzes des Fahrzeugluftreifens auf einer korrespondierend ausgebildeten Felge über den Umfang des Fahrzeugluftreifens erstreckt ausgebildeten Wulstkern umgeschlagen ist und sich mit dem Umschlag der Karkasse nach radial außen erstreckt, mit einem ersten Wulstverstärkungsmaterial, das auf der dem Hauptteil der Karkasse axial zugewandten Seite des Wulstkerns - insbesondere zwischen dem Hauptteil der Karkasse und dem Wulstkern - angeordnet ist, und mit einem zweiten Wulstverstärkungsmaterial, das auf der dem Umschlag der Karkasse axial zugewandten Seite des Wulstkerns-insbesondere zwischen dem Umschlag der Karkasse und dem Wulstkern - angeordnet ist, bei dem sowohl das erste als auch das zweite Wulstverstärkungsmaterial einen spiralig von radial innen nach radial außen in Umfangsrichtung kontinuierlich gewickelten Festigkeitsträger aufweisen, wobei die beiden Festigkeitsträger eine gegenläufig gerichtete Wicklungsrichtung aufweisen.

Hierdurch wird der Wulstkern im Wulstbereich sandwichartig beidseitig von in Umfangsrichtung ausgerichtetem Wulstverstärkungsmaterial eingeschlossen. Dies ermöglicht eine hohe Umfangssteifigkeit und durch die spiralige gegenläufige Wicklung eine sehr gleichförmige Kraftübertragung von Karkasse in den Wulstkern und vom Wulstkern in die Karkasse über den gesamten Umfang in beide Umfangsrichtungen. Die gegenläufige Wicklungsrichtung der beiden Wulstverstärkungsmaterialien bewirkt darüber hinaus eine Verschränkung des Wulstbereichs, so dass eine Krafteinleitung in den von den Wulsverstärkungsmaterialen eingeschlossenen Wulstbereich sehr gleichmäßig ermöglicht wird und das Risiko hoher lokaler Belastungsspitzen im von den Wulstverstärkungsmaterialien eingeschlossenen Wulstbereich minimiert werden kann. Hierdurch sind die Anforderungen an die Belastbarkeit der zwischen den Wulstverstärkungsmaterialien eingeschlossenen Materialien im Wulstbereich reduziert, so dass eine größere Auswahl an Materialien zum Einsatz kommen kann. Dies ermöglicht eine größere individuelle Auslegungs- und Gestaltungsvielfalt des Wulstbereichs und somit ein breiteres Auslegungsspektrum der Fahrzeugluftreifen.

Besonders vorteilhaft ist die Ausbildung eines Fahrzeugluftreifens gemäß den Merkmalen von Anspruch 2 mit einem an der radialen Außenseite des Wulstkerns angeordneten in Umfangsrichtung des Fahrzeugluftreifens über den gesamten Umfang des Fahrzeugluftreifens erstreckt ausgebildeten Kernreiter, wobei das erste Wulstverstärkungsmaterial axial zwischen Hauptteil der Karkasse und Kernreiter vom Wulstkern nach radial außen entlang der Oberfläche des Kernreiters und/oder wobei das zweite Wulstverstärkungsmaterial axial zwischen Umschlag der Karkasse und Kernreiter vom Wulstkern nach radial außen entlang der Oberfläche des Kernreiters erstreckt ausgebildet ist, wodurch eine sehr enge und umfangssteife Anbindung an Wulstkern und Kernreiter mit sehr gleichmeißiger Krafteinleitung und Lastverteilung in den Wulstkern und den Wulstreiter ermöglicht wird. Das Risiko unerwünscht hoher Lastspitzen in Wulstkern und Wulstreiter kann hierdurch reduziert werden.

Bevorzugt zur Verbesserung der Reifenhaltbarkeit im Wulstbereich ist die Ausbildung eines Fahrzeugluftreifens gemäß den Merkmalen von Anspruch 3, wobei der Umschlag der Karkasse in radialer Richtung nach außen im radialen Erstreckungsbereich des Kernreiters endet.

Besonders vorteilhaft ist die Ausbildung eines Fahrzeugluftreifens gemäß den Merkmalen von Anspruch 4 mit einer Karkasse radialer Bauart. Hierdurch kann die Reifenhaltbarkeit im Wulstbereich weiter verbessert werden.

Besonders vorteilhaft ist die Ausbildung eines Fahrzeugluftreifens gemäß den Merkmalen von Anspruch 5, wobei die Karkasse Festigkeitsträger aus Stahl aufweist. Hierdurch kann die Reifenhaltbarkeit im Wulstbereich weiter verbessert werden.

Bevorzugt ist die Ausbildung eines Fahrzeugluftreifens gemäß den Merkmalen von Anspruch 6, wobei das Wulstverstärkungsmaterial Festigkeitsträger aus Stahl aufweist. Hierdurch kann die Reifenhaltbarkeit im Wulstbereich weiter verbessert werden.

Bevorzugt ist die Ausbildung eines Fahrzeugluftreifens gemäß den Merkmalen von Anspruch 7, wobei die Festigkeitsträger des Wulstverstärkungsmaterials direkt auf die Oberfläche des Wulstkerns und/oder des Wulstkernreiters gewickelte Festigkeitsträger sind. wodurch eine besonders enge und umfangssteife Anbindung an Wulstkern und Kernreiter mit sehr gleichmeißiger Krafteinleitung und Lastverteilung in den Wulstkern und den Wulstreiter in einfacher Weise ermöglicht wird. Das Risiko unerwünscht hoher Lastspitzen in Wulstkern und Wulstreiter kann hierdurch reduziert werden. Wulstkern, Kernreiter und Wulstverstärkungsmaterial können vorab zu einem Modulbauteil aufgebaut und als solches vorgefertigtes Bauteil beim Reifenaufbau eingebaut werden.

Besonders vorteilhaft ist die Ausbildung eines Fahrzeugluftreifens gemäß den Merkmalen von Anspruch 8, wobei jeweils der spiralig von radial innen nach radial außen in Umfangsrichtung kontinuierlich gewickelten Festigkeitsträger des ersten Wulstverstärkungsmaterial eines ersten und eines zweiten Wulstes des Fahrzeugluftreifens eine gleich gerichtete Wicklungsrichtung aufweisen, und wobei jeweils der spiralig von radial innen nach radial außen in Umfangsrichtung kontinuierlich gewickelten Festigkeitsträger des zweiten Wulstverstärkungsmaterial des ersten und des zweiten Wulstes des Fahrzeugluftreifens eine gleich gerichtete Wicklungsrichtung aufweisen. Diese im Fahrzeugluftreifen symmetrische Ausbildung ist besonders bei Fahrzeugluftreifen mit laufrichtungsgebundenem Profil hinsichtlich des Abriebverhaltens des Profilesvon Vorteil. Darüberhinaus können Schadensbilder des Wulstbereiches von Fahrzeugluftreifen mit derariger symmetrischer Ausbildung positiv beeinflusst werden.

Anspruch 9 beinhaltet eine Ausbildung eines Fahrzeugluftreifens, bei der der spiralig von radial innen nach radial außen in Umfangsrichtung kontinuierlich gewickelten Festigkeitsträger des ersten Wulstverstärkungsmaterial des ersten Wulstes und der spiralig von radial innen nach radial außen in Umfangsrichtung kontinuierlich gewickelten Festigkeitsträger des zweiten Wulstverstärkungsmaterial des zweiten Wulstes des Fahrzeugluftreifens eine gleich gerichtete Wicklungsrichtung aufweisen, und bei der der spiralig von radial innen nach radial außen in Umfangsrichtung kontinuierlich gewickelten Festigkeitsträger des zweiten Wulstverstärkungsmaterial des ersten Wulstes und der spiralig von radial innen nach radial außen in Umfangsrichtung kontinuierlich gewickelten Festigkeitsträger des ersten Wulstverstärkungsmaterial des zweiten Wulstes des Fahrzeugluftreifens eine gleich gerichtete Wicklungsrichtung aufweisen. Diese assymetrische Ausbildung im Fahrzeugluftreifen ermöglicht eine sehr einfache Herstellung mit gleichen vorgefertigten Wulstkernen für beide Wülste.

Die Erfindung ist im Folgenden an Hand eines in den Figuren 1 bis 9 dargestellten Ausführungsbeispiels bei einem Nutzfahrzeugreifen mit radialer Karkasse dargestellt. Hierin zeigen
- Fig. 1: schematische Querschnittsdarstellung eines Fahrzeugluftreifens zur Erläuterung des Reifenaufbaus in einer die Drehachse des Fahrzeugluftreifens beinhaltenden Schnittebene,
- Fig. 2: Schnittdarstellung des Fahrzeugluftreifens von Fig. 1 gemäß Schnitt II-II von Fig. 1 zur Erläuterung der Wickelrichtung des ersten Wulstverstärkers,
- Fig. 3: Schnittdarstellung des Fahrzeugluftreifens von Fig. 1 gemäß Schnitt III-III von Fig. 1 zur Erläuterung der Wickelrichtung des zweiten Wulstverstärkers,
- Fig. 4: perspektivische Schnittdarstellung des in Fig. 1 dargestellten rechten Wulstkerns mit zwei Wulstverstärkern in erster Ausführungsform,
- Fig. 5: perspektivische Schnittdarstellung des in Fig. 1 dargestellten rechten Wulstkerns mit zwei Wulstverstärkern in zweiter Ausführungsform,
- Fig. 6: schematische Darstellung der beiden Wulstbereiche des Fahrzeugluftreifens in erster symmetrischer Ausführung,
- Fig. 7: schematische Darstellung der beiden Wulstbereiche des Fahrzeugluftreifens in zweiter symmetrischer Ausführung,
- Fig. 8: schematische Darstellung der beiden Wulstbereiche des Fahrzeugluftreifens in erster assymmetrischer Ausführung,
- Fig. 9: schematische Darstellung der beiden Wulstbereiche des Fahrzeugluftreifens in zweiter assymmetrischer Ausführung,

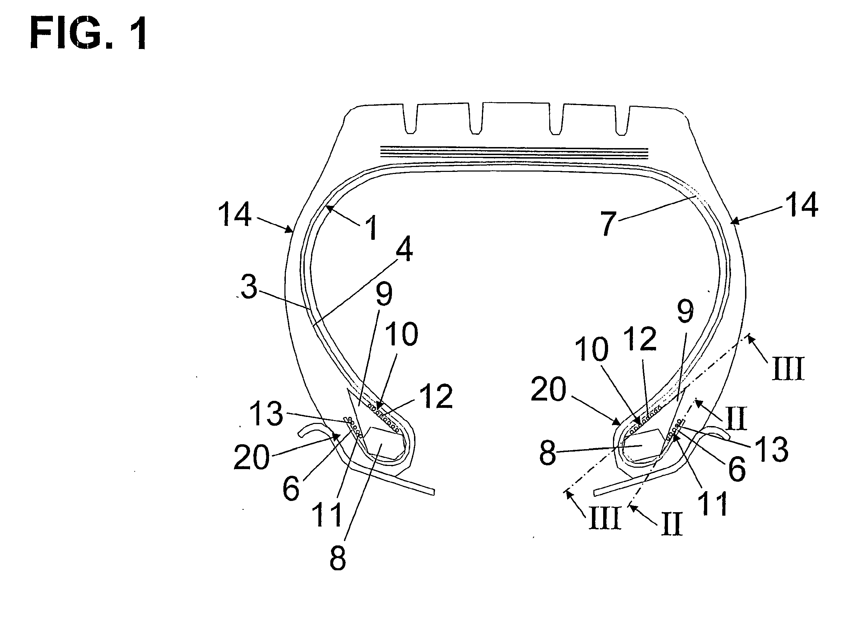

Fig. 1 zeigt einen Nutzfahrzeugluftreifen mit einem Laufstreifen 15 und mit zwei Reifenseitenwänden 14, die sich jeweils ausgehend vom Laufstreifen 15 in bekannter Weise nach radial innen erstrecken. Der Nutzfahrzeugluftreifen ist in bekannter, herkömmlicher Weise mit jeweils einem am radial inneren Ende der Reifenseitenwände über den Umfang des Reifens erstreckten Reifenwulst 20 mit darin konzentrisch zum Fahrzeufluftreifen ausgebildetem ringförmigen Wulstkern 8 ausgebildet. Der Nutzfahrzeugluftreifen ist in bekannter, herkömmlicher Weise mit einer Innenschicht 2 aus relativ luftundurchlässigem Gummimaterial bekannter Art, die sich axial von Wulstkern 8 zu Wulstkern 8 und in Umfangsrichtung über den gesamten Umfang des Reifens erstreckt, aufgebaut. Radial über die Innenschicht 2 ist eine Karkasse 1 aus zwei Karkassenlagen 3 und 4 radialer, bekannter Bauart aufgebaut. Die Karkassenlagen 3 und 4 erstrecken sich über den gesamten Umfang des Reifens und in axialer Richtung mit einem Hauptteil 7 der Karkasse von dem einen Wulstkern 8 zu dem anderen Wulstkern 8, wo sie sich in bekannter 2/0-Anordnung von axial innerhalb des Wulstkerns 8 radial unterhalb des Wulstkerns 8 nach axial außen erstrecken und axial außerhalb der Wulstkeme 8 jeweils um den Wulstkern 8 nach radial oben hin umgeschlagen sind, so dass die Karkasslagen 3 und 4 axial außerhalb der Wulstkeme 8 jeweils einen Umschlag 6 der Karkasse bilden. Der Umschlag 6 verläuft parallel zum Wulstkern 8 und zum radial oberhalb des Wulstkerns 8 ausgebildeten Kernprofil 9 und endet im radialen Erstreckungsbereich des Kernprofils 9.

Die Karkassenlagen 3 und 4 sind jeweils aus parallelen in Kautschuk eingebetteten metallischen Festigkeitsträgern - beispielsweise aus Stahl - ausgebildet

Zwischen Karkasse 1 und dem profilierten Laufstreifen 15 ist in bekannter Weise ein Gürtel 5mit vier aufeinander aufgebauten Gürtellagen 16, 17, 18, 19 ausgebildet, die sich jeweils über den Umfang des Reifens und in axialer Richtung von Reifenschulter zu Reifenschulter erstrecken. Die Gürtellagen 16, 17, 18, 19 sind jeweils aus parallelen in Kautschuk eingebetteten metallischen Festigkeitsträgern - beispielsweise aus Stahl - ausgebildet. Die Festigkeitsträger der ersten Gürtellage 16 sind in in der Äquatorebene unter einem spitzen Winkel von kleiner oder gleich 50° - beispielsweise von 20° - zur Umfangsrichtung verlaufend ausgebildet. Die Festigkeitsträger der zweiten Gürtellage 17 sind in in der Äquatorebene unter einem spitzen Winkel von kleiner oder gleich 50°-beispielsweise von 20° - zur Umfangsrichtung verlaufend ausgebildet. Die Festigkeitsträger der dritten Gürtellage 18 sind in in der Äquatorebene unter einem spitzen Winkel von kleiner oder gleich 50°- beispielsweise von 20° - zur Umfangsrichtung verlaufend ausgebildet. Die Festigkeitsträger der vierten Gürtellage 19 sind in in der Äquatorebene unter einem spitzen Winkel von kleiner oder gleich 50° - beispielsweise von 20° - zur Umfangsrichtung verlaufend ausgebildet.

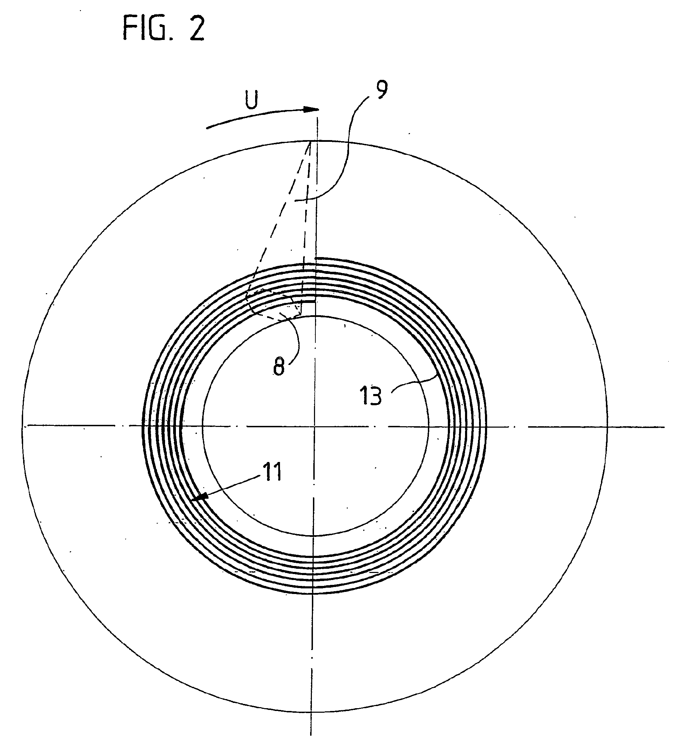

Axial zwischen Hauptteil 7 der Karkasse und Wulstkern 8 mit Kemprofil 9 ist ein erster Wulstverstärkungsstreifen 10 ausgebildet, der sich über den gesamten Umfang des Reifens erstreckt. Der Wulstverstärkungsstreifen 10 ist aus einem - wie in Fig. 2 zu erkennen ist - spiralig von radial innen nach radial außen in Umfangsrichtung kontinuierlich gewickelten Festigkeitsträger 12 aufgebaut. Der Festigkeitsträger 12 ist ein in Kautschuk eingebetteter, metallischer Festigkeitsträger 12, der beispielsweise aus einem Monofilament oder aus einem Multifilament aufgebaut ist. Beispielsweise ist der Festigkeitsträger ein Stahlcord..

Der Wulstverstärkungsstreifen 10 liegt unmittelbar auf der Oberfläche des Kernprofils 9 und des Wulstkerns 8 und erstreckt sich ausgehend von einer radialen Position, die der radial äußersten Erstreckung des Wulstkerns 8 entspricht, in radialer Richtung nach außen bis in einen radiale Position 50mm bis 70mm radial außerhalb der radial äußersten Erstreckung des Wulstkerns 8 - und in radialer Richtung nach innen bis in einen radiale Position 50 bis 70mm radial innerhalb der radial äußersten Erstreckung des Wulstkerns 8.

In einer nicht dargestellten Ausführung erstreckt sich der Wulstverstärkungsstreifen 10 ausgehend von der radialen Position, die der radial äußersten Erstreckung des Wulstkerns 8 entspricht, in radialer Richtung nach außen bis maximal über die gesamte Seitenwanderstreckung nach außen und in radialer Richtung nach innen bis maximal über die gesamte Seitenwanderstreckung nach innen.

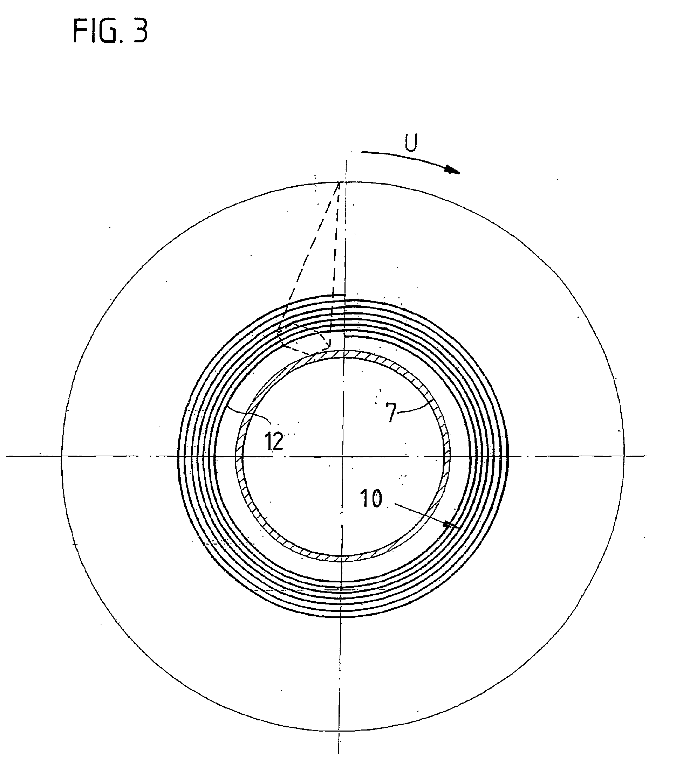

Axial zwischen Umschlag 8 der Karkasse und Wulstkern 8 mit Kemprofil 9 ist ein zweiter Wulstverstärkungsstreifen 11 ausgebildet, der sich über den gesamten Umfang des Reifens erstreckt. Der Wulstverstärkungsstreifen 11 ist aus einem - wie in Fig. 3 zu erkennen ist - spiralig von radial innen nach radial außen in Umfangsrichtung kontinuierlich gewickelten Festigkeitsträger 13 aufgebaut. Der Festigkeitsträger 13 ist ein in Kautschuk eingebetteter, metallischer Festigkeitsträger 13, der beispielsweise aus einem Monofilament oder aus einem Multifilament aufgebaut ist. Beispüielsweise ist der Festigkeitsträger ein Stahlcord..

Der Wulstverstärkungsstreifen 11 liegt unmittelbar auf der Oberfläche des Kernprofils 9 und des Wulstkerns 8 und erstreckt sich ausgehend von einer radialen Position, die der radial äußersten Erstreckung des Wulstkerns 8 entspricht, in radialer Richtung nach außen bis in einen radiale Position 50mm bis 70mm radial außerhalb der radial äußersten Erstreckung des Wulstkerns 8 - und in radialer Richtung nach innen bis in einen radiale Position 50 bis 70mm radial innerhalb der radial äußersten Erstreckung des Wulstkerns 8.

In einer nicht dargestellten Ausführung erstreckt sich der Wulstverstärkungsstreifen 11 ausgehend von der radialen Position, die der radial äußersten Erstreckung des Wulstkerns 8 entspricht, in radialer Richtung nach außen bis maximal über die gesamte Seitenwanderstreckung nach außen und in radialer Richtung nach innen bis maximal über die gesamte Seitenwanderstreckung nach innen.

Wie in Fig.2, Fig.3 und Fig.4 zu erkennen ist, ist die Wicklungsrichtung von radial innen nach radial außen gesehen des Festigkeitsträgers 12 des ersten Wulstverstärkungsstreifens 10 in entgegengesetzter Umfangsrichtung zur Wicklungsrichtung des Festigkeitsträgers 13 des zweiten Wulstverstärkungsstreifens 11 gewählt.

Dabei ist in einer ersten, in den Fig.2, Fig.3 und Fig.4 dargestellten Ausführungsform die Wicklungsrichtung des Festigkeitsträgers 13 des zweiten Wulstverstärkungsstreifens 11 von radial innen nach radial außen entgegen der bei Vorwärtsfahrt eines Fahrzeuges mit montiertem Fahrzeugluftreifen in Drehrichtung gerichteten Umfangsrichtung U gewickelt und die Wicklungsrichtung des Festigkeitsträgers 12 des ersten Wulstverstärkungsstreifens 10 von radial innen nach radial außen in der bei Vorwärtsfahrt eines Fahrzeuges mit montiertem Fahrzeugluftreifen in Drehrichtung gerichteten Umfangsrichtung U gewickelt.

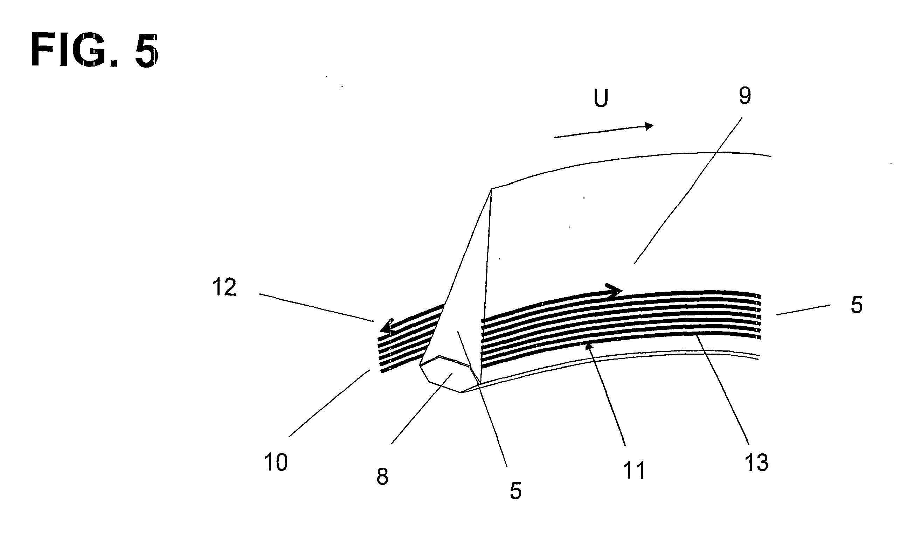

In einer zweiten, in Fig.5 dargestellten Ausführungsform die Wicklungsrichtung des Festigkeitsträgers 12 des ersten Wulstverstärkungsstreifens 10 von radial innen nach radial außen entgegen der bei Vorwärtsfahrt eines Fahrzeuges mit montiertem Fahrzeugluftreifen in Drehrichtung gerichteten Umfangsrichtung U gewickelt und die Wicklungsrichtung des Festigkeitsträgers 13 des zweiten Wulstverstärkungsstreifens 12 von radial innen nach radial außen in der bei Vorwärtsfahrt eines Fahrzeuges mit montiertem Fahrzeugluftreifen in Drehrichtung gerichteten Umfangsrichtung U gewickelt.

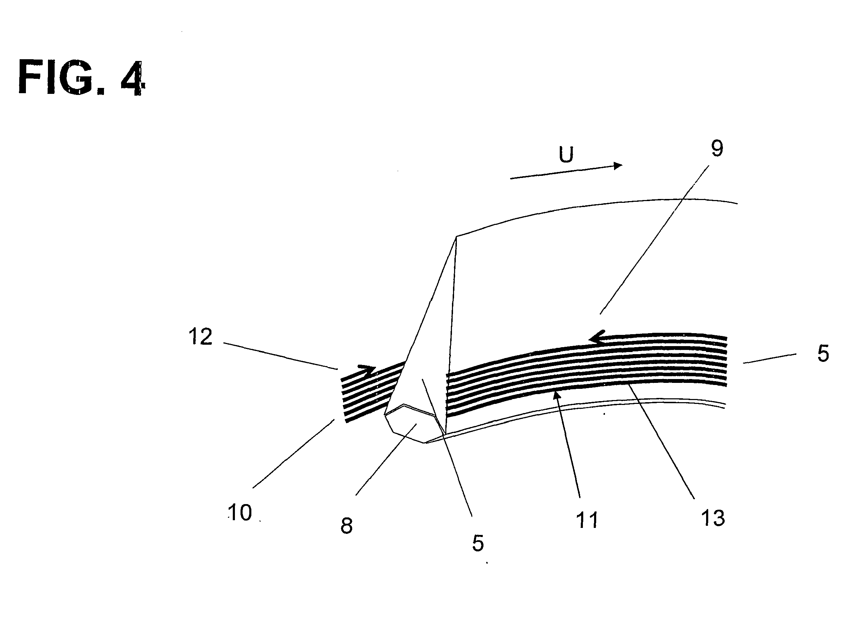

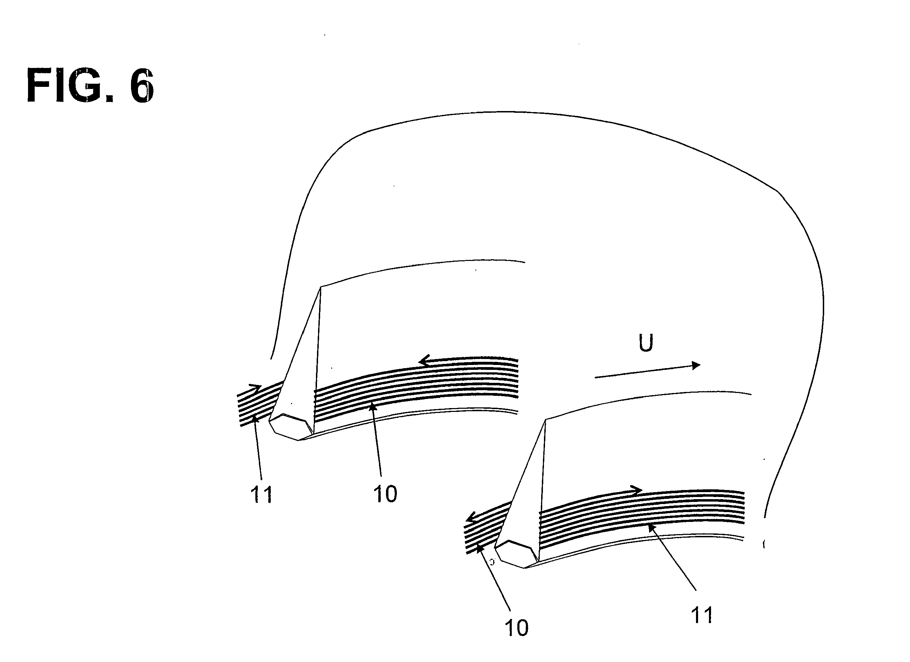

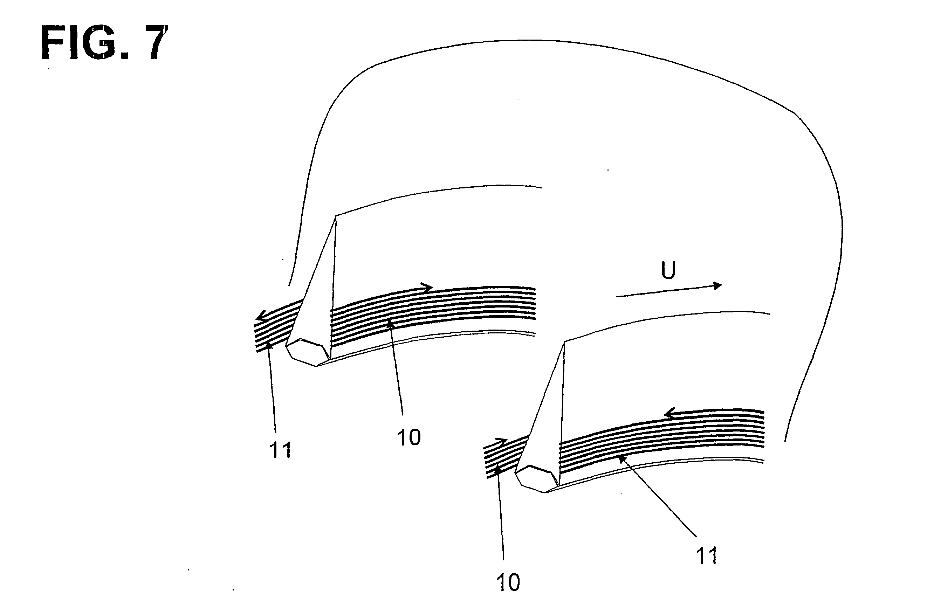

Fig. 6 und Fig.7 zeigen schematisch jeweils eine Ausbildung der beiden Wulstbereiche des Fahrzeugluftreifens in symmetrischer Ausbildung, wobei beide Wülstbereiche in der Ausführung von Fig. 6 jeweils der in Fig. 5 dargestellten Ausführung und beide Wulstbereiche der in Fig. 7 dargestellten Ausführung jeweils der in Fig.4 dargestellten Ausführung des Wulstes entspricht.

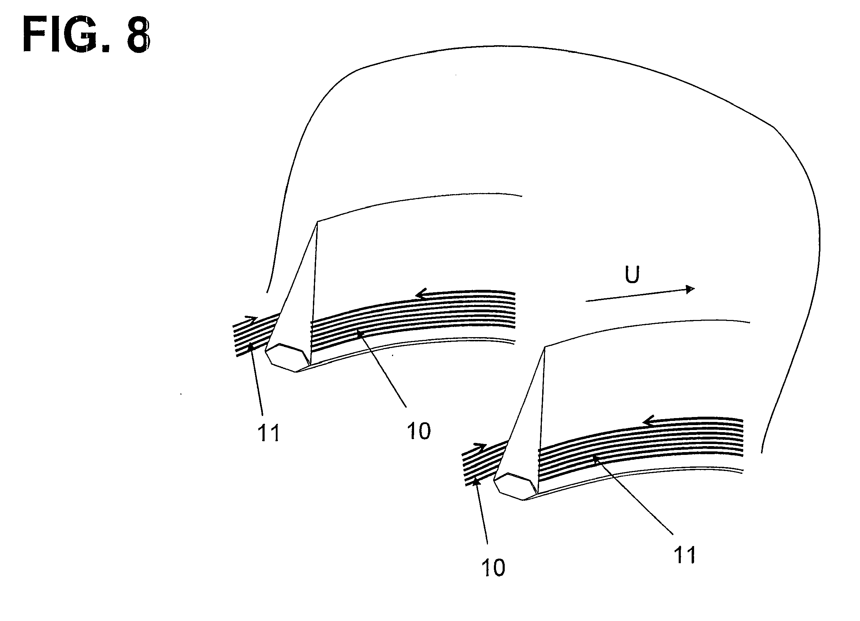

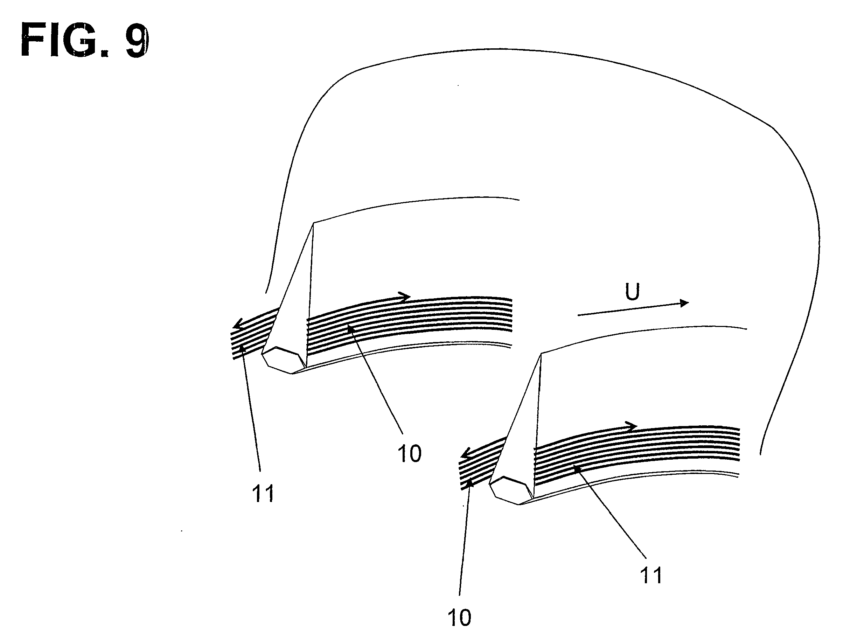

Fig. 8 und Fig. 9 zeigen schematisch jeweils eine Ausbildung der beiden Wulstbereiche des Fahrzeugluftreifens in assymetrischer Ausbildung. Bei der Ausführung von Fig. 8 entspricht der rechte Wulstbereich der in Fig. 5 dargestellten Ausführung und der linke Wulstbereich der in Fig.4 dargestellten Ausführung. Bei der Ausführung von Fig. 9 entspricht der rechte Wulstbereich der in Fig.4 dargestellten Ausführung und der linke Wulstbereich der in Fig. 5 dargestellten Ausführung.

### Bezugszeichenliste

- 1: Karkasse
- 2: Innenschicht
- 3: Erste Karkassenlage
- 4: Zweite Karkassenlage
- 5: Gürtel
- 6: Umschlag
- 7: Hauptteil der Karkasse
- 8: Wulstkern
- 9: Kernprofil
- 10: Wulstverstärkungsstreifen
- 11: Wulstverstärkungsstreifen
- 12: Festigkeitsträger
- 13: Festigkeitsträger
- 14: Reifenseitenwand
- 15: Laufstreifen
- 16: Gürtellage
- 17: Gürtellage
- 18: Gürtellage
- 19: Gürtellage
- 20: Reifenwulst

## Patentansprüche

1. Fahrzeugluftreifen mit einem Laufstreifen, mit zwei Reifenseitenwänden (14) und jeweils einem am radial inneren Ende einer Reifenseitenwand ausgebildeten Reifenwulst (20), mit einer Karkasse (1), die sich auf beiden Seiten des Laufstreifens mit einem Hauptteil (7) der Karkasse vom Laufstreifen ausgehend durch die Reifenseitenwand (14) nach radial innen zum Reifenwulst (20) erstreckt und die im Reifenwulst um einen zur Sicherung des Sitzes des Fahrzeugluftreifens auf einer korrespondierend ausgebildeten Felge über den Umfang des Fahrzeugluftreifens erstreckt ausgebildeten Wulstkern (8) umgeschlagen ist und sich mit dem Umschlag (6) der Karkasse nach radial außen erstreckt, mit einem ersten Wulstverstärkungsmaterial (10), das auf der dem Hauptteil (7) der Karkasse axial zugewandten Seite des Wulstkerns (8) - insbesondere zwischen dem Hauptteil (7) der Karkasse und dem Wulstkern (8) - angeordnet ist, und mit einem zweiten ulstverstärkungsmaterial (11), das auf der dem Umschlag (6) der Karkasse axial zugewandten Seite des Wulstkerns (8)-insbesondere zwischen dem Umschlag (6) der Karkasse und dem Wulstkern (8)- angeordnet ist,
**dadurch gekennzeichnet,**
**dass** sowohl das erste (10) als auch das zweite Wulstverstärkungsmaterial (11) einen spiralig von radial innen nach radial außen in Umfangsrichtung kontinuierlich gewickelten Festigkeitsträger aufweisen (12;13), wobei die beiden Festigkeitsträger (12;13) eine gegenläufig gerichtete Wicklungsrichtung aufweisen.

2. Fahrzeugluftreifen gemäß den Merkmalen von Anspruch 1, mit einem an der radialen Außenseite des Wulstkern (8) angeordneten in Umfangsrichtung des Fahrzeugluftreifens über den gesamten Umfang des Fahrzeugluftreifens erstreckt ausgebildeten Kernreiter (9), wobei das erste Wulstverstärkungsmaterial (10) axial zwischen Hauptteil (7) der Karkasse und Kernreiter (9) vom Wulstkern (8) nach radial außen entlang der Oberfläche des Kernreiters (9) und/oder wobei das zweite Wulstverstärkungsmaterial (11) axial zwischen Umschlag (6) der Karkasse und Kernreiter (9) vom Wulstkern (8) nach radial außen entlang der Oberfläche des Kernreiters (9) erstreckt ausgebildet ist.

3. Fahrzeugluftreifen gemäß den Merkmalen von Anspruch 2,
wobei der Umschlag (6) der Karkasse in radialer Richtung nach außen im radialen Erstreckungsbereich des Kernreitees (9) endet.

4. Fahrzeugluftreifen gemäß den Merkmalen von einem oder mehreren der vorangegangenen Ansprüche, mit einer Karkasse (1) radialer Bauart..

5. Fahrzeugluftreifen gemäß den Merkmalen von einem oder mehreren der vorangegangenen Ansprüche,
wobei die Karkasse (1) Festigkeitsträger aus Stahl aufweist.

6. Fahrzeugluftreifen gemäß den Merkmalen von einem oder mehreren der vorangegangenen Ansprüche,
wobei das Wulstverstärkungsmaterial (10;11) Festigkeitsträger aus Stahl aufweist.

7. Fahrzeugluftreifen gemäß den Merkmalen von einem oder mehreren der Ansprüche 2 bis 6, wobei die Festigkeitsträger (12;13) des Wulstverstärkungsmaterials direkt auf die Oberfläche des Wulstkerns (8) und/oder des Wulstkernreiters (9) gewickelte Festigkeitsträger (12;13) sind.

8. Fahrzeugluftreifen gemäß den Merkmalen von einem oder mehreren der vorangegangenen Ansprüche,
wobei jeweils der spiralig von radial innen nach radial außen in Umfangsrichtung kontinuierlich gewickelten Festigkeitsträger (12) des ersten Wulstverstärkungsmaterial (10) eines ersten und eines zweiten Wulstes des Fahrzeugluftreifens eine gleich gerichtete Wicklungsrichtung aufweisen, und
wobei jeweils der spiralig von radial innen nach radial außen in Umfangsrichtung kontinuierlich gewickelten Festigkeitsträger (13) des zweiten Wulstverstärkungsmaterial (11) des ersten und des zweiten Wulstes des Fahrzeugluftreifens eine gleich gerichtete Wicklungsrichtung aufweisen.

9. Fahrzeugluftreifen gemäß den Merkmalen von einem oder mehreren der Ansprüche 1 bis 7,
wobei der spiralig von radial innen nach radial außen in Umfangsrichtung kontinuierlich gewickelten Festigkeitsträger (12) des ersten Wulstverstärkungsmaterial (10) des ersten Wulstes und der spiralig von radial innen nach radial außen in Umfangsrichtung kontinuierlich gewickelten Festigkeitsträger (13) des zweiten Wulstverstärkungsmaterial (11) des zweiten Wulstes des Fahrzeugluftreifens eine gleich gerichtete Wicklungsrichtung aufweisen, und
wobei der spiralig von radial innen nach radial außen in Umfangsrichtung kontinuierlich gewickelten Festigkeitsträger (13) des zweiten Wulstverstärkungsmaterial (11) des ersten Wulstes und der spiralig von radial innen nach radial außen in Umfangsrichtung kontinuierlich gewickelten Festigkeitsträger (12) des ersten Wulstverstärkungsmaterial (10) des zweiten Wulstes des Fahrzeugluftreifens eine gleich gerichtete Wicklungsrichtung aufweisen.

## Claims

1. Pneumatic vehicle tire having a tread, having two tire side walls (14) and in each case one tire bead (20) which is formed at the radially inner end of a tire side wall, having a carcass (1) which starts from the tread and extends on both sides of the tread with a main part (7) of the carcass through the tire side wall (14) in the radially inner direction to the tire bead (20) and which is folded over in the tire bead about a bead core (8) which is formed so as to extend over the circumference of the pneumatic vehicle tire in order to secure the seat of the pneumatic vehicle tire on a correspondingly embodied rim, and extends radially outward with the fold (6) in the carcass, having a first bead reinforcement material (10) which is arranged on the side of the bead core (8) axially facing the main part (7) of the carcass, in particular between the main part (7) of the carcass and the bead core (8), and having a second bead reinforcement material (11) which is arranged on the side of the bead core (8) axially facing the fold (6) in the carcass, in particular between the fold (6) in the carcass and the bead core (8), **characterized in that** both the first (10) and the second bead reinforcement materials (11) have strength members (12; 13) which are continuously wound in a helical shape from radially on the inside to radially on the outside in the circumferential direction, the two strength members (12; 13) having opposing winding directions.

2. Pneumatic vehicle tire according to the features of Claim 1, having a core rider (9) which is arranged on the radial outer side of the bead core (8) and is formed so as to extend in the circumferential direction of the pneumatic vehicle tire over the entire circumference of the pneumatic vehicle tire, the first bead reinforcement material (10) being formed axially between the main part (7) of the carcass and the core rider (9) from the bead core (8) in the radially outer direction along the surface of the core rider (9) and/or the second bead reinforcement material (11) being formed so as to extend axially between the fold (6) in the carcass and the core rider (9) from the bead core (8) in the radially outer direction along the surface of the core rider (9).

3. Pneumatic vehicle tire according to the features of Claim 2, the fold (6) in the carcass ending in the radially outer direction in the radial region of the extension of the core rider (9).

4. Pneumatic vehicle tire according to the features of one or more of the preceding claims, having a carcass (1) of a radial design.

5. Pneumatic vehicle tire according to the features of one or more of the preceding claims, the carcass (1) having strength members made of steel.

6. Pneumatic vehicle tire according to the features of one or more of the preceding claims, the bead reinforcement material (10; 11) having strength members made of steel.

7. Pneumatic vehicle tire according to the features of one or more of Claims 2 to 6, the strength members (12; 13) of the bead reinforcement material being strength members (12; 13) which are wound directly onto the surface of the bead core (8) and/or of the bead core rider (9).

8. Pneumatic vehicle tire according to the features of one or more of the preceding claims, in each case the strength member (12), which is continuously wound in a helical shape from radially inward to radially outward in the circumferential direction, of the first bead reinforcement material (10) of a first and second bead of the pneumatic vehicle tire having the same winding direction, and in each case the strength member (13), which is continuously wound in a helical shape from radially inward to radially outward in the circumferential direction, of the second bead reinforcement material (11) of the first and second beads of the pneumatic vehicle tire having the same winding direction.

9. Pneumatic vehicle tire according to the features of one or more of Claims 1 to 7, the strength member (12), which is continuously wound in a helical shape from radially inward to radially outward in the circumferential direction, of the first bead reinforcement material (10) of the first bead and the strength member (13), which is continuously wound in a helical shape from radially inward to radially outward in the circumferential direction, of the second bead reinforcement material (11) of the second bead of the pneumatic vehicle tire having the same winding direction, and
the strength member (13), which is continuously wound in a helical shape from radially inward to radially outward in the circumferential direction, of the second bead reinforcement material (11) of the first bead and the strength member (12), which is continuously wound in a helical shape from radially inward to radially outward in the circumferential direction, of the first bead reinforcement material (10) of the second bead of the pneumatic vehicle tire having the same winding direction.

## Revendications

1. Bandage pneumatique pour véhicule, qui présente une bande de roulement, deux parois latérales (14) de bandage qui présentent chacune un talon (20) de bandage réalisé à l'extrémité radialement intérieure d'une paroi latérale du bandage, une carcasse (1) qui s'étend sur les deux côtés de la bande de roulement, une partie principale (7) de la carcasse partant de la paroi latérale (14) du bandage pour s'étendre radialement vers l'intérieur jusqu'au talon (20) du bandage et rabattue dans le talon du bandage autour d'une âme de talon (8) formée sur la périphérie du bandage pneumatique de véhicule pour assurer l'assise du bandage pneumatique de véhicule sur une jante de configuration appropriée et pour s'étendre radialement vers l'extérieur avec le rabat (6) de la carcasse, un premier matériau (10) de renfort de talon disposé sur le côté de l'âme (8) du talon tourné axialement vers la partie principale (7) de la carcasse, en particulier entre la partie principale (7) de la carcasse et l'âme (8) du talon, et un deuxième matériau de renfort de talon (11) disposé sur le côté de l'âme (8) du talon tourné axialement vers le rabat (6) de la carcasse, en particulier entre le rabat (6) de la carcasse et l'âme (8) du talon,
**caractérisé en ce que**
tant le premier matériau (10) de renfort de talon que le deuxième matériau (11) de renfort de talon présentent un renfort (12; 13) enroulé en spirale continue depuis le côté radialement intérieur jusqu'au côté radialement extérieur dans le sens de la périphérie, les directions d'enroulement des deux renforts (12; 13) étant orientées dans des sens opposés.

2. Bandage pneumatique de véhicule selon les caractéristiques de la revendication 1, qui présente un cavalier d'âme (9) disposé sur le côté radialement extérieur de l'âme (8) du talon et s'étendant sur toute la périphérie du bandage pneumatique de véhicule dans le sens de la périphérie du bandage pneumatique du véhicule, le premier matériau (10) de renfort de talon s'étendant axialement le long de la surface du cavalier d'âme (9) entre la partie principale (7) de la carcasse et le cavalier d'âme (9), radialement vers l'extérieur depuis l'âme (8) du talon et/ou le deuxième matériau (11) de renfort de talon s'étendant axialement le long de la surface du cavalier d'âme (9) entre le rabat (6) de la carcasse et le cavalier d'âme (9), radialement vers l'extérieur depuis l'âme (8) du talon.

3. Bandage pneumatique de véhicule selon les caractéristiques de la revendication 2, dans lequel le rabat (6) de la carcasse se termine dans la direction allant radialement vers l'extérieur dans la zone occupée par l'extension du cavalier d'âme (9).

4. Bandage pneumatique de véhicule selon les caractéristiques d'une ou plusieurs des revendications précédentes, dont la carcasse (1) a une structure radiale.

5. Bandage pneumatique de véhicule selon les caractéristiques d'une ou plusieurs des revendications précédentes, dans lequel la carcasse (1) présente des renforts en acier.

6. Bandage pneumatique de véhicule selon les caractéristiques d'une ou plusieurs des revendications précédentes, dans lequel le matériau (10; 11) de renfort de talon présente des renforts en acier.

7. Bandage pneumatique de véhicule selon les caractéristiques d'une ou plusieurs des revendications 2 à 6, dans lequel les renforts (12; 13) du matériau de renfort de talon sont des renforts (12; 13) enroulés directement sur la surface de l'âme (8) du talon et/ou du cavalier d'âme (9) du talon.

8. Bandage pneumatique de véhicule selon les caractéristiques d'une ou plusieurs des revendications précédentes, dans lequel les renforts (12) du premier matériau de renfort (10) d'un premier et d'un deuxième talon du bandage pneumatique de véhicule enroulés en spirale continue depuis le côté radialement intérieur jusqu'au côté radialement extérieur dans le sens de la périphérie ont une direction d'enroulement de même orientation, les renforts (13) du deuxième matériau (11) de renfort du premier et du deuxième talon du bandage pneumatique du véhicule enroulés en spirale continue depuis le côté radialement intérieur jusqu'au côté radialement extérieur dans le sens de la périphérie ayant des directions d'enroulement de même orientation.

9. Bandage pneumatique de véhicule selon les caractéristiques d'une ou plusieurs des revendications 1 à 7, dans lequel le renfort (12) du premier matériau de renfort (10) du premier talon, enroulé en spirale continue depuis le côté radialement intérieur jusqu'au côté radialement extérieur dans le sens de la périphérie et le renfort (13) du deuxième matériau de renfort (11) du deuxième talon du bandage pneumatique de véhicule enroulé en spirale continue depuis le côté radialement intérieur jusqu'au côté radialement extérieur dans le sens de la périphérie ont des directions d'enroulement de même orientation, le renfort (13) du deuxième matériau (11) de renfort du premier talon enroulé en spirale continue depuis le côté radialement intérieur jusqu'au côté radialement extérieur dans le sens de la périphérie et le renfort (12) du premier matériau de renfort (10) du deuxième talon du bandage pneumatique de véhicule enroulé en spirale continue depuis le côté radialement intérieur jusqu'au côté radialement extérieur dans le sens de la périphérie ont des directions d'enroulement de même orientation.
